**Europäisches Patentamt**

**European Patent Office**

**Office européen des brevets**

(11) Veröffentlichungsnummer: **0 131 918**
A2

## (12) EUROPÄISCHE PATENTANMELDUNG

(21) Anmeldenummer: **84108209.2**

(22) Anmeldetag: **12.07.84**

(51) Int. Cl.⁴: **B 29 C 65/14**
**A 23 G 1/04, G 02 B 6/04**

(30) Priorität: **19.07.83 DE 3325930**

(43) Veröffentlichungstag der Anmeldung:
**23.01.85 Patentblatt 85/4**

(84) Benannte Vertragsstaaten:
**AT BE CH DE FR GB IT LI LU NL SE**

(71) Anmelder: **Gebr. Bindler Maschinenfabrik GmbH & Co. KG**
**Kölner Strasse 102-106**
**D-5275 Bergneustadt/Rhld.1(DE)**

(72) Erfinder: **Bindler, Uwe, Dipl.-Ing.**
**Kölner Strasse 102-106**
**D-5275 Bergneustadt 1(DE)**

(74) Vertreter: **Meyer, Alfred, Dipl.-Ing. Dr. jur.**
**Schwanenmarkt 10**
**D-4000 Düsseldorf 1(DE)**

(54) **Vorrichtung zum Verbinden von Teilen eines Gegenstandes miteinander.**

(57) Die Erfindung betrifft eine Vorrichtung zum Verbinden von Teilen eines Gegenstandes miteinander, der zumindest im Verbindungsbereich dieser Teile aus einem unter Einwirkung von Wärme schmelzenden Material besteht. Die Teile werden an ihren Berührungsbereichen aneinander gesetzt. Im allgemeinen mußte bisher die Erwärmung der ganzen Teile und ein entsprechender Energieverlust in Kauf genommen werden, obwohl nur eine Erwärmung an den eigentlichen Berührungsbereichen erforderlich war. Demgegenüber schlägt die Erfindung vor, daß IR-Strahlung mittels Lichtleiterfasern in die Nähe der Berührungsbereiche geleitet wird. Die Lichtleiterfasern sind hierbei in einer der Form der Berührungsbereiche angepaßten Form angeordnet, so daß nur die Berührungsbereiche erwärmt werden können.

Fig. 1

## Vorrichtung zum Verbinden von Teilen eines Gegenstandes miteinander

Die Erfindung betrifft eine Vorrichtung zum Verbinden von Teilen eines Gegenstandes miteinander, der zumindest im Verbindungsbereich dieser Teile aus einem unter Einwirkung von Wärme schmelzenden Material besteht, wobei die miteinander zu verbindenden Teile unter Bildung von Berührungsbereichen aneinander gesetzt werden.

Es ist bekannt, Teile metallischer Gegenstände und auch Teile nichtmetallischer Gegenstände wie beispielsweise Teile aus Kunststoff miteinander zu verschweißen bzw. so stark zu erwärmen, daß das jeweilige Material miteinander verfließt und eine feste Verbindung eingeht.

In vielen Fällen ist es erforderlich, die miteinander zu verbindenden Teile eines Gegenstandes insgesamt zu erwärmen um zu erreichen, daß das Material im Berührungsbereich der Teile die zum Verschmelzen erforderliche Temperatur hat.

Wenn beispielsweise Teile eines Hohlkörpers miteinander verbunden werden müssen, so sind die Berührungsflächen

- 2 -

zwischen diesen Teilen im Verhältnis zu der Größe
des gesamten Hohlkörpers relativ klein. Eine Erwärmung
ist nur im Bereich dieser Berührungsflächen erforderlich.
Es müssen bisher jedoch die zu verbindenden Teile im
wesentlichen in ihrer Gesamtheit erwärmt werden, um
die notwendige Temperatur im Berührungsbereich zu
gewährleisten. Dies bedeutet einen überaus großen Energieverlust.

Im Nahrungsmittelbereich beispielsweise werden in
großem Umfang Artikel aus Schokoladenmasse in Form von
Hohlkörpern hergestellt. Die Erwärmung der miteinander
zu verbindenden Teile dieser Artikel erfolgt mit Hilfe
von IR-Strahlern, die die Teile insgesamt erwärmen.

Aber auch bei der Herstellung von Gegenständen aus Kunststoff, insbesondere in Form von Hohlkörpern, ergibt
sich die gleiche Problematik. Vielfach ist nicht nur
der Energieverlust nachteilig, der sich dadurch ergibt,
daß Bereiche des jeweiligen Gegenstandes bzw. Hohlkörpers
erwärmt werden, deren Erwärmung überhaupt nicht notwendig ist. Es kommt hinzu, daß die Intensität der Erwärmung sehr genau gesteuert werden muß, um nicht eine
ungewollte Verformung der miteinander zu verbindenden
Teile in Kauf zu nehmen.

Es war somit Aufgabe der vorliegenden Erfindung, eine
zum Verbinden entsprechender Teile eines Gegenstandes
aus schmelzbarem Material geeignete Vorrichtung zu
schaffen, mit deren Hilfe es möglich ist, die Wärmeenergie nur gezielt im eigentlichen Verbindungsbereich
zur Wirkung zu bringen.

Zur Lösung dieser Aufgabe wird erfindungsgemäß vorge-

0131918

schlagen, daß IR-Strahlung mittels Lichtleiterfasern
in die Nähe der Berührungsbereiche geleitet wird.

Lichtleiterfasern sind an sich bekannt. Sie werden bisher
zur Leitung sichtbaren Lichtes in unterschiedlichen
Anwendungsformen benutzt. Die Erfindung geht demgegenüber
von der Erkenntnis aus, daß Lichtleiterfasern auch
zur Leitung ·von IR-Strahlung geeignet sind und daß
Lichtleiterfasern die Möglichkeit schaffen, ihre austrittsseitigen Enden in nahezu jede beliebige Form zu
bringen. Man kann auf diese Weise die jeweils gewünschte
Form eines Wärmeaustrittsbereiches sehr genau vorgeben
und die Wärmeenergie gezielt nur in den Berührungsbereichen der zu verbindenden Teile zur Wirkung bringen.
Somit läßt sich eine wesentliche Energieeinsparung
erzielen.

Um die zunächst ungebündelt aus einem IR-Strahler austretende Wärmeenergie auf ein Bündel von Lichtleiterfasern zu konzentrieren, kann zwischen einem IR-Strahler
und den Lichtleiterfasern eine Sammellinse im Strahlengang angeordnet sein.

Es ist im Rahmen der Erfindung denkbar, den Berührungsbereich zwischen zwei miteinander zu verbindenden Teilen
abschnittweise mit den Lichtleiterfasern nachzuformen
und zeitlich nacheinander zu erwärmen. Dies könnte sich
empfehlen, wenn die Form der Berührungsflächen häufig
wechselt und immer nur wenige Teile bzw. Gegenstände
auf diese Weise herzustellen sind. Insbesondere bei
größeren Stückzahlen ist es jedoch vorteilhaft, wenn
sich die austrittsseitigen Enden der Lichtleiterfasern
in einer der Form des ganzen Berührungsbereiches
zumindest angenähert angepaßten Anordnung befinden,
so daß der ganze Berührungsbereich gleichzeitig erwärmt wird und der Verbindungsvorgang einheitlich ist.

In weiterer Ausgestaltung der Erfindung wird vorgeschlagen, daß die Lichtleiterfasern in einem ersten Teil ihres Verlaufes zueinander parallel in einem Bündel zusammengefaßt sind und daß jeweils ein Teil der im Bündel enthaltenen Lichtleiterfasern zu einer Halterung geführt ist, die die Enden dieser Lichtleiterfasern in einer der Form des jeweiligen Berührungsbereiches entsprechenden Form festhält. Man erhält auf diese Weise eingangsseitig einen verhältnismäßig großen Bündelquerschnitt, der mit IR-Strahlung beaufschlagt werden kann. Diese kann gleichzeitig aufgrund der entsprechenden Aufteilung der Lichtleiterfasern auf einzelne Halterungen mehreren zu erwärmenden Teilen zugeführt werden.

Vorteilhaft ist es hierbei, wenn die Halterung als Platte ausgebildet ist, die mit einer der Form des Berührungsbereiches entsprechenden Aussparung versehen ist, und wenn die Enden der Lichtleiterfasern in der Aussparung gehalten sind.

In diesem Zusammenhang wird weiterhin vorgeschlagen, daß sich die einzelnen Teile in vorgegebenen Abständen in rasterförmiger Anordnung auf einem Träger befinden und daß in der Platte der Form des Berührungsbereiches jeweils entsprechende Aussparungen in derselben rasterförmigen Anordnung vorgesehen sind. Dies ermöglicht eine gleichzeitige Behandlung einer größeren Anzahl von im Berührungsbereich zu erhitzenden Teilen im Rahmen einer maschinellen Fertigung.

Die Lichtleiterfasern erwärmen sich beim Transport der IR-Strahlung. Es kann deshalb gegebenenfalls vorteilhaft sein, wenn die Lichtleiterfasern zumindest auf einem Teil
ihres Verlaufes der Einwirkung eines Kühlmediums ausgesetzt sind. Insbesondere kann hierbei mit Luft oder
mit Wasser gekühlt werden.

Nachfolgend wird ein Ausführungsbeispiel der Erfindung
anhand einer Zeichnung näher beschrieben. Im einzelnen
zeigen:

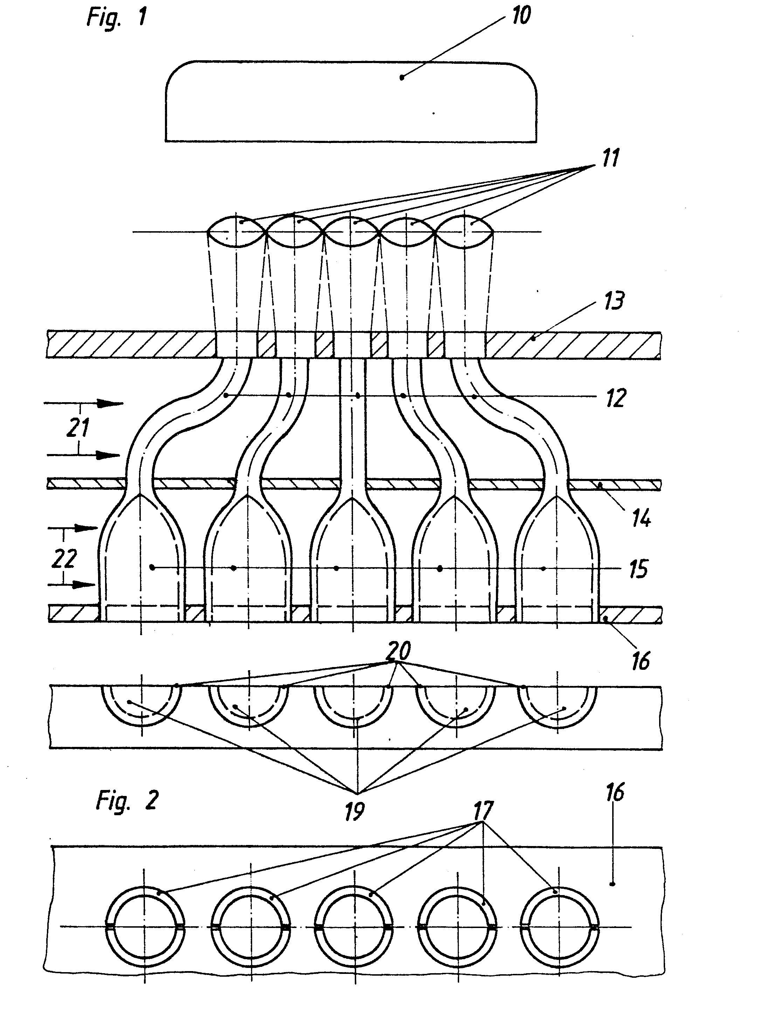

Fig. 1 die Darstellung des prinzipiellen Aufbaus
        einer derartigen Vorrichtung;

Fig. 2 die Draufsicht auf eine als Halterung für
        die Enden der Lichtleiterfasern dienende Platte.

Die Strahlung eines IR-Strahlers 10 wird durch eine
Sammellinse 11 gebündelt und auf den Eingangsquerschnitt
einer Vielzahl von Lichtleiterfasern 12 gegeben, die
in Bündelform mittels einer Platte 13 gehalten sind.
Bis zu einer weiteren Platte 14 verlaufen die Lichtleiterfasern 12 parallel. In ihrem weiteren Verlauf
verzweigen sie sich in einzelne Bündelteile 15. Die
jeweils zu einem Bündelteil 15 gehörenden Lichtleiterfasern 12 sind bis zu einer nächsten Platte 16 geführt.
Diese ist als Halterung für die Enden der Lichtleiterfasern 12 ausgebildet und hat kreisringförmige Aussparungen 17, in die die Enden der Lichtleiterfasern 12
eintreten, so daß sie jeweils eine der Form der Aussparung 17 entsprechende Anordnung einnehmen.

Auf einer als Träger 18 dienenden Unterlage befinden sich zwei halbkugelförmgie Teile 19, die zu einem kugelförmigen Körper miteinander verbunden werden sollen. Die
Teile 19 haben somit jeweils kreisringförmige Berührungsflächen 20 von jeweils kreisringförmigem Querschnitt, der dem kreisringförmigen Querschnitt einer
Aussparung 17 in der Platte 16 entspricht.

Wenn der IR-Strahler 10 eingeschaltet wird, übertragen
die Lichtleiterfasern 12 die Wärmestrahlung bis in
die Nähe  der Berührungsflächen 20 der Teile 19, wobei
die Enden der Lichtleiterfasern 12 von den Berührungsflächen 20 einen Abstand von nur wenigen Millimetern
haben. Dieser Abstand braucht nur so groß zu sein, daß
eine Berührung zwischen den Lichtleiterfasern 12 und
den Teilen 19 mit Sicherheit ausgeschlossen ist. Die Teile 19 werden jetzt nur im Bereich der Berührungsflächen
20 intensiv erwärmt, so daß das Material in diesem Bereich
ausreichend weich ist, um beim Aufeinanderlegen der beiden
Teile 19           verfließen bzw. verschmelzen zu
können.

Der zwischen den Platten 13 und 14 einerseits oder 14
und 16 andererseits befindliche Raum kann jeweils als
Kühlkanal ausgebildet sein. Die Pfeile 21 im oberen Bereich
sollen eine Wasserströmung bezeichnen, während mit den
Pfeilen 22 im unteren Bereich eine zur Kühlung dienende
Luftströmung angedeutet ist.

Die Teile 19 können Kunststoffteile sein. Die Erfindung
ist aber ebenso anwendbar, wenn diese Teile 19 beispielsweise aus Schokoladenmasse oder einem anderen
schmelzbaren Nahrungsmittel bestehen.

Die Stückzahl der mit der erfindungsemäß ausgebildeten
Vorrichtung gleichzeitig im Bereich der Berührungsflächen
erhitzbaren Teile ist beliebig. Die Unterlage in Form des Trägers 18 kann entsprechend groß bemessen werden,
so daß die jeweils zu erhitzenden Teile in rasterförmiger Anordnung nebeneinander liegen können. Anzahl
und Anordnung der IR-Strahler 10 und der Lichtleiterfasern 12 und die Aufteilung derselben in einzelne
Bündelteile 15 lassen sich den Gegebenheiten in einfacher
Weise anpassen.

- 8 -

Bezugszifferliste:

10 IR-Strahler

11 Sammellinse

12 Lichtleiterfaser

13 Platte

14 Platte

14 Platte

15 Bündelteil

16 Platte

17 Aussparung

18 Träger

19 Teil

20 Berührungsfläche

21 Pfeil

22 Pfeil

Dipl.-Ing. Dr. jur. Alfred W. Meyer
Patentanwalt
Zugelassener Vertreter beim Europäischen Patentamt

D 4000 Düsseldorf 1
Schwanenmarkt 01
Telefon: (02 11) 32 60 80
Telegramme: Meypat
Telex: 8 58 2282 mypa d

0131918

Mein Zeichen.  6518 A 47

Düsseldorf, 18.7.1983

Aktenzeichen

Anmelder:  Gebr. Bindler Maschinenfabrik GmbH & Co.KG
Kölner Str. 102-109, 5275 Bergneustadt 1


A n s p r ü c h e :


1. Vorrichtung zum Verbinden von Teilen eines Gegenstandes miteinander, der zumindest im Verbindungsbereich dieser Teile aus einem unter Einwirkung
   von Wärme schmelzenden Material besteht, wobei die
   miteinander zu verbindenden Teile unter Bildung
   von Berührungsbereichen aneinander gesetzt werden,
   dadurch gekennzeichnet, daß IR-Strahlung mittels Lichtleiterfasern (12) in die Nähe der Berührungsbereiche
   (20) geleitet wird.


2. Vorrichtung nach Anspruch 1, dadurch gekennzeichnet,
   daß zwischen einem IR-Strahler (10) und den Lichtleiterfasern (12) eine Sammellinse (11) im Strahlengang angeordnet ist.


3. Vorrichtung nach Anspruch 1 oder 2, dadurch gekennzeichnet, daß sich die austrittsseitigen Enden der
   Lichtleiterfasern (12) in einer der Form des ganzen
   Berührungsbereiches (20) zumindest angenähert angepaßten Anordnung befinden.

- 2 -

4. Vorrichtung nach einem der vorherigen Ansprüche,
   dadurch gekennzeichnet, daß die Lichtleiterfasern
   (12) in einem ersten Teil ihres Verlaufes zueinander
   parallel in einem Bündel zusammengefaßt sind und
   daß jeweils ein Teil (15) der im Bündel enthaltenen
   Lichtleiterfasern (12) zu einer Halterung (16) geführt ist, die die Enden dieser Lichtleiterfasern
   (12) in einer der Form des jeweiligen Berührungsbereiches (20) entsprechenden Form festhält.

5. Vorrichtung nach Anspruch 4, dadurch gekennzeichnet,
   daß die Halterung als Platte (16) ausgebildet ist,
   die mit einer der Form des Berührungsbereiches (20)
   entsprechenden Aussparung (17) versehen ist, und
   daß die Enden der Lichtleiterfasern (12) in der
   Aussparung (17) gehalten sind.

6. Vorrichtung nach Anspruch 5, dadurch gekennzeichnet,
   daß sich die einzelnen Teile (19) in vorgegebenen
   Abständen in rasterförmiger Anordnung auf einem
   Träger (18) befinden und daß in der Platte (16)
   der Form des Berührungsbereiches (20) jeweils entsprechende Aussparungen (17) in derselben rasterförmigen Anordnung vorgesehen sind.

7. Vorrichtung nach einem der vorherigen Ansprüche,
   dadurch gekennzeichnet, daß die Lichtleiterfasern
   (12) zumindest auf einem Teil ihres Verlaufes der
   Einwirkung eines Kühlmediums ausgesetzt sind.

8. Anwendung der Vorrichtung nach einem oder mehreren
   der vorherigen Ansprüche zum Verbinden von Kunststoffteilen.

9. Anwendung der Vorrichtung nach einem oder mehreren der vorherigen Ansprüche zum Verbinden von Teilen eines Gegenstandes, der aus einem schmelzbaren Nahrungsmittel, insbesondere aus Schokoladenmasse, besteht.

10. Anwendung der Vorrichtung nach einem oder mehreren der vorherigen Ansprüche zum Verbinden von Teilen eines Hohlkörpers.

Fig. 1

Fig. 2